# DEMANDE DE BREVET EUROPEEN

(11) **EP 0 926 112 A1**
(43) Date de publication de la demande: **30.06.1999**
(21) Numéro de dépôt: 98403263.1
(22) Date de dépôt: 22.12.1998
(51) Int. Cl.: C04B 41/48

(54) **Procédé d'imperméabilisation et d'étanchéification d'un matériau de faible porosité par imprégnation et radiopolymérisation in situ d'une résine visqueuse et matériau ainsi obtenu**

(30) Priorité: 24.12.1997 FR 9716519
(71) Demandeur: COMMISSARIAT A L'ENERGIE ATOMIQUE, 75015 Paris (FR)
(72) Inventeur: Chaumat, Gilles, 38640 Claix (FR); Tran, Quoc Khoi, 38330 St. Nazaire les Eymes (FR); Descalle, Pierre, 38600 Fontaine (FR)
(74) Mandataire: Dubois-Chabert, Guy

(57) **Abrégé**

La présente invention concerne un procédé d'imperméabilisation et d'étanchéïfication d'un matériau de faible porosité, généralement inférieure ou égale à 5%, par imprégnation et radiopolymérisation in situ d'une résine visqueuse.

L'invention concerne également le matériau ainsi obtenu.

L'invention s'applique en particulier à l'imperméabilisation et à l'étanchéification des matériaux à base de pierre.

## Description

La présente invention concerne un procédé d'imperméabilisation et d'étanchéïfication d'un matériau de faible porosité, généralement inférieure ou égale à 5%, par imprégnation et radiopolymérisation in situ d'une résine visqueuse.

L'invention concerne également le matériau ainsi obtenu.

L'invention s'applique en particulier à l'imperméabilisation et à l'étanchéification des matériaux à base de pierre.

Le domaine technique de l'invention peut être défini comme celui du traitement de matériaux poreux en particulier des matériaux à base de pierre en vue d'améliorer leurs propriétés, notamment leur imperméabilité ou étanchéité à l'eau ou à d'autres liquides.

Il est ainsi connu, à des fins de renforcement, d'utiliser des résines polymères pour constituer des matériaux composites à base de matériaux en pierre soit sous la forme d'agrégats, soit sous la forme de lamellés.

Ainsi le document EP-A-0 698 483 est-il relatif à un procédé de fabrication de dalles en un matériau à base de pierre, tel que le marbre ou le granite, renforcées à l'aide d'éléments en acier fixés au dos des dalles par une résine thermodurcissante imprègnant des fibres de verre.

Le document JP-A-60 39959 décrit un procédé pour décorer une surface en ciment et lui conférer l'aspect du marbre ou du granite, en lui appliquant un papier imprimé imprégné avec une résine thermodurcissable puis en le pressant à chaud pour donner un stratifié. Une couche adhésive est de préférence intercalée entre le papier et le ciment. Le matériau obtenu possède entre autres une résistance à l'humidité, à la pollution et à la chaleur.

Le document ZA-A-87 08745 concerne un procédé pour rendre hydrophobe un agglomérat tel que du sable, de la pierre ou autre, dans lequel cet agglomérat est traité par mélange avec émulsion aqueuse d'un polymère synthétique comprenant essentiellement des (méth)acrylate(s) d'alkyle en C1 à C18, du butadiène, de l'acétate de vinyle ou du styrène qui est ensuite séchée ou durcie pour donner un produit imperméable.

Enfin, le document SU-A 392 026 a trait à un procédé pour rendre du béton cellulaire plus résistant et hydrophobe en incorporant du styrène dans le mélange utilisé pour sa préparation.

Dans les documents mentionnés ci-dessus, la résine ou polymère mis en oeuvre a pour rôle essentiel de coller/cimenter les agrégats, couches ou éléments structuraux utilisés, en reconstituant un nouveau matériau composite. Le matériau obtenu ne subit pas une étanchéification en volume dans sa porosité, et il n'est pas possible de la sorte de traiter des objets déjà existant en leur conservant leurs propriétés et leur aspect initial.

D'autres procédés, proposent de réaliser un film polymère étanche sur la surface de matériaux poreux.

Ainsi le document US-A-5 242 978 qui correspond au document EP-A-0 483 583 décrit-il une composition pour le revêtement en surface d'un substrat tel que la pierre qui comprend un agent durcissant comprenant un groupe amine primaire et un groupe alcoxysilane, et un précurseur de matière plastique de type polyacétoacétate ou polyacetoacétamide.

La réaction du précurseur et de l'agent durcissant conduit à la formation de polyénamines qui réticulent sans exposition à l'humidité atmosphérique pour former un film à la surface du substrat.

Le document JP-A-1028288 concerne un procédé pour éviter la contamination et la détérioration d'un matériau à base de pierre poreuse, par exemple de marbre naturel, en appliquant sur la surface de ce matériau une solution d'imprégnation contenant un alcoxysilane, et en séchant la solution appliquée avant d'appliquer une peinture transparente à base de résine de silicone et de sécher de nouveau.

De même, l'émulsion décrite dans le document ZA-A-87 08745 déjà cité plus haut, peut-elle être également utilisée pour le traitement d'une structure en agglomérat de sable ou de pierre, par exemple dans le bâtiment, par application à la surface de cette structure.

Les procédés décrits ci-dessus où l'on réalise un film polymère étanche, qui est en fait un simple enduit, essentiellement sur la surface des matériaux, présentent de nombreux défauts.

Ainsi, le film préparé a t-il le défaut d'être très sensible à l'endommagement, car il suffit d'une simple rayure ou d'un impact pour remettre en cause l'étanchéité du matériau.

Par ailleurs, dans les conditions qui règnent lors d'un usage à l'extérieur, avec une exposition aux ultraviolets, à la chaleur, et à l'humidité, il n'existe à l'heure actuelle aucun film polymère suffisamment résistant pour être compatible avec les garanties décennales.

Afin de réaliser un traitement en volume d'un matériau à base de pierre, il faut avoir recours à l'imprégnation du matériau par des résines ou mélanges de monomères et à une véritable polymérisation, qui peut être réalisée par exemple, par catalyse chimique, par catalyse thermochimique ou sous l'action d'un rayonnement (radiopolymérisation).

Plus précisément, le document US-A- 4 460 625 décrit-il des compositions de revêtement et d'imprégnation pour le béton qui comprennent un mélange de monomères contenant un (méth) acrylate de dicyclopentènyle ou de dicyclopentènyloxyalkyle et un méthacrylate d'hydroxyalkyle, et un catalyseur de polymérisation formé d'un peroxyde organique et d'un accélérateur amine organique, ou d'un sel ou complexe d'un métal polyvalent et d'un hydroperoxyde organique, ou de leurs mélanges.

Ces compositions sont polymérisées in situ pour donner des surfaces dures, continues, hydrophobes, résistant à l'usure et aux intempéries.

Le document DE-A-3 584 062 correspondant au document EP-A-0 220 448 est relatif à l'imprégnation d'un corps poreux, par exemple en pierre, par immersion dudit corps poreux préalablement mis sous vide dans un bain de résine notamment acrylique et d'agent durcissant tout en appliquant une pression. La résine est ensuite durcie par chauffage tout en maintenant la pression.

Les procédés décrits dans ces documents présentent un certain nombre d'inconvénients comme tous les procédés qui mettent en oeuvre une catalyse chimique pour réaliser la polymérisation in situ des monomères. Parmi ces inconvénients, on peut par exemple mentionner:
- La polymérisation par voie chimique utilise typiquement un catalyseur de type peroxyde, qui est, de manière générale, délicate à mettre en oeuvre, car la résine peut se polymériser accidentellement à tout moment, pouvant ainsi détériorer irréversiblement à la fois toute l'installation d'imprégnation ainsi que tout le stockage de résines.

Par ailleurs, la polymérisation est difficilement contrôlable, en particulier au coeur du matériau.
- Les résines formant le mélange de monomères sont parfois, comme dans le document US-A-4 460 625 assez sophistiquées : c'est le cas en particulier des (méth)acrylates de dicyclopentènyloxyalkyle et de dicyclopentényle.
- La polymérisation est généralement déclenchée par un catalyseur mélangé avec un retardateur.

Il faut donc réaliser l'imprégnation du matériau poreux avant que se polymérisation ne commence, ce qui introduit une contrainte très lourde dans la mise en oeuvre de ce procédé.
- L'imprégnation de matériaux denses peut entraîner un phénomène de diffusion préférentielle entre le monomère et le catalyseur, c'est-à-dire que les proportions de l'un par rapport à l'autre seront mal maîtrisées et ne donneront pas les conditions optimum pour la polymérisation catalysée.
- Enfin, la polymérisation par voie chimique nécessite souvent des températures élevées, et est alors appelée thermocatalyse.

La thermocatalyse avec des peroxydes est ainsi mise en oeuvre à une température voisine de 100°C ce qui peut entraîner des risques d'explosion et d'incendie des installations en particulier lors de l'addition du catalyseur au monomère, ainsi que le rejet d'une quantité importante de monomère en excès après l'imprégnation.

La polymérisation sous l'action d'un rayonnement ionisant, ou radiopolymérisation, ne présente pas la plupart des inconvénients des polymérisations par catalyse chimique ou thermique, et comporte l'avantage notable de pouvoir être réalisée à température ambiante.

La radiopolymérisation par rayonnement, par exemple par rayonnement γ ou électronique, est ainsi bien connue, et utilisée pour densifier des matériaux poreux ou très poreux comme le bois, le plâtre, le béton, le tuffeau et les pierres très poreuses.

Ainsi, le document FR-A-2 055 979 décrit-il un procédé de traitement de béton léger encore appelé béton cellulaire ou aéré, qui est un béton de faible densité et de porosité élevée, afin d'améliorer ses propriétés.

Ce procédé consiste à imprégner la pièce en béton léger par un produit polymérisable contenant en particulier des monomères vinyliques fluides, comme le styrène, le méthacrylate de méthyle, l'acétate de vinyle, ou des polymères ou copolymères dont la viscosité est abaissée par mélange avec lesdits monomères.

Le produit polymérisable est ensuite polymérisé sous l'action d'un rayonnement ionisant tel qu'un rayonnement gamma, d'un rayonnement X, ou électronique.

De même, le document SU-A-392 026 déjà cité plus haut indique que le béton cellulaire, c'est-à-dire un béton très poreux, peut être imprégné par du styrène qui est ensuite polymérisé par irradiation.

Le document de M. STEINBERG et J.E. BACKSTROM « The preparation, properties, and potential applications of concrete-polymer materials » commision of the European Communities, Report N° 36, Conference ou radiation and isotope technique in civil Engineering, Brussels, October 28 to 30, 1970, étudie la préparation de matériaux béton-polymère qui sont réalisés par imprégnation de béton poreux, dont la porosité peut atteindre jusqu'à 14%, à l'aide de monomères, puis polymérisation des monomères, de préférence à l'aide d'une irradiation par les rayons gamma.

Il est indiqué que les monomères mis en oeuvre doivent avoir une viscosité suffisamment faible, il s'agit par exemple de styrène et de méthacrylate de méthyle dont la mise en oeuvre est largement développée dans les exemples de ce document.

Les autres monomères tels que les polyesters ont des viscosités trop élevées qui rend leur diffusion difficile dans le béton et nécessite leur dilution avec des monomères de faible viscosité.

On constate donc que les procédés mettant en jeu une imprégnation puis une radiopolymérisation concernent dans tous les cas, des matériaux très poreux, dont la porosité est supérieure à 10 %, de plus l'imprégnation est réalisée dans la plupart des cas d'une manière mécanique et par surpression ce qui occasionne une forte consommation d'énergie.

Il existe donc un besoin par un procédé permettant de réaliser de manière efficace l'étanchéification et l'imperméabilisation de matériaux peu poreux, qui n'a pas été réalisée jusqu'à présent.

En d'autres termes, il existe un besoin pour un procédé de traitement d'un matériau peu poreux, par imprégnation et radiopolymérisation, permettant de réaliser non seulement une imprégnation, mais également une étanchéification et une imperméabilisation totales de ce matériau peu poreux, le polymère formé devant remplir au moins les deux conditions suivantes :
- remplir toute la porosité ouverte du matériau peu poreux,
- tapisser l'intérieur des pores en conservant une bonne interface de contact entre le matériau et le polymère et une bonne cohésion.

Le but de l'invention est de fournir un procédé d'imperméabilisation et d'étanchéification d'un matériau faiblement poreux, par imprégnation et radio polymérisation in situ, qui réponde à l'ensemble des besoins indiqués ci-dessus, qui ne présente pas les inconvénients, défauts, et limitations des procédés de l'art antérieur, et qui résolve les problèmes posés par les procédés de l'art antérieur.

Ce but et d'autres encore sont atteints conformément à l'invention, par un procédé d'imperméabilisation et d'étanchéification d'un matériau faiblement poreux dans lequel ledit matériau est imprégné par immersion dans une résine liquide visqueuse comprenant un monomère ou un mélange de monomères radiopolymérisables choisi parmi l'un des groupes suivants :
- les mélanges styrène-polyester insaturé dans lesquels le styrène représente de 30 à 60 % en poids du mélange,
- les méthacrylates d'hydroxyalkyle dont le groupe alkyle comporte de 1 à 4 atomes de carbone et leurs mélanges,
ledit monomère ou mélange de monomères représentant au moins 50% en poids de la résine,
puis ladite résine imprégnant le matériau est polymérisée in situ en irradiant ledit matériau imprégné avec un rayonnement ionisant.

Le procédé selon l'invention présente une efficacité totale et permet d'obtenir à l'issue du traitement une étanchéité et une imperméabilisation totale du matériau à tous types de liquide tels que l'eau.

De manière surprenante, le procédé selon l'invention, appliqué à des matériaux peu poreux, met en oeuvre une résine liquide visqueuse, c'est-à-dire présentant généralement une viscosité de 80 à 200 cps (certipoises), au contraire des procédés de l'art antérieur appliqués des matériaux poreux ou très poreux, qui mettent en oeuvre et conseillent expressément des résines radiopolymérisables très fluides, à base par exemple de méthacrylate de méthyle, de méthacrylate de butyle ou de styrène.

Il apparaît donc, à fortiori, que l'homme du métier, en vue de l'imprégnation par des résines de matériau faiblement poreux et de la radiopolymérisation in-situ de ces résines auraient cherché à utiliser une résine présentant la viscosité la plus faible possible.

La présente invention va donc à l'encontre d'un préjugé, et emprunte une démarche fondamentalement différente des procédés de l'art antérieur, en mettant précisément en oeuvre une résine liquide visqueuse spécifique formée d'un monomère ou mélange de monomères spécifiques.

Ainsi, de manière surprenante, et selon l'invention, il a été mis en évidence que parmi toutes les résines radiopolymérisables susceptibles d'être utilisées pour l'étanchéification et l'imperméabilisation de matériaux faiblement poreux, c'était d'une part les résines visqueuses qui donnaient les meilleurs résultats lors de la radiopolymérisation, et non, comme prévu, les résines fluides ou peu visqueuses, et que d'autre part, parmi ces résines visqueuses les résines comprenant un monomère ou un mélange de monomères spécifique tel que décrit plus haut convenaient particulièrement.

Autrement dit, il a été démontré par les inventeurs que si l'imprégnation d'un matériau poreux peu être réalisé par la plupart des résines radiopolymérisables, l'étanchéité totale après polymérisation n'était pas acquise systématiquement, et que, contrairement à toute attente, les deux conditions essentielles que le polymère formé doit remplir après polymérisation, à savoir le remplissage de toute la porosité ouverte du matériau, ainsi que le tapissage de l'intérieur des pores, tout en conservant une bonne interface de contact pierre polymère, n'étaient remplies que si l'on mettait en oeuvre la résine liquide visqueuse spécifique selon l'invention et non des résines fluides ou peu visqueuses. Alors que tout incitait l'homme du métier à choisir ces résines fluides ou peu visqueuses.

Avec ces dernières, il a été en effet constaté expérimentalement que bien que l'imprégnation du matériau poreux puisse être facilement réalisée, l'étanchéité après polymérisation était déficiente.

Par exemple, des essais à partir de résines à base de méthacrylate de méthyle, de méthacrylate de butyle ou de styrène purs qui sont pourtant des résines radio-polymérisables bien connues et très fluides, et qui donc a priori, devraient être bien adaptées à des matériaux à faible porosité, ont donné de mauvais résultats en étanchéité, même si l'imprégnation et la radiopolymérisation étaient effectives.

Cela va à l'encontre de ce qui est conseillé par exemple dans le document de M. STEINBERG et al, cité plus haut.

Ceci renforce le caractère inattendu de l'invention, lié au choix de la résine, puisque l'efficacité de l'étanchéification et de l'imperméabilisation ne peut se déduire en aucune manière de la capacité démontrée ou supposée de la résine à imprégner un matériau poreux et à y être radiopolymérisée.

Outre le fait que le procédé selon l'invention remplit les deux conditions indiquées plus haut, relatives au remplissage de la totalité de la porosité ouverte du matériau, et au tapissage de l'intérieur des pores, en conservant une interface polymère-matériau, par exemple pierre cohésive, ce procédé se caractérise en outre par le fait qu'il est particulièrement bien adapté aux matériaux peu poreux ou faiblement poreux c'est-à-dire présentant une porosité inférieure ou égale à 5 % qui sont habituellement difficiles à imprégner.

Dans l'art antérieur, on a vu que l'étanchéification et l'imperméabilisation par imprégnation et radiopolymérisation étaient limitées à des matériaux poreux ou très poreux, tel que le béton à savoir présentant une porosité généralement supérieure à 10%.

Il est même possible grâce au procédé selon l'invention de traiter des matériaux ayant une porosité inférieure ou égale à 1%.

Du fait que la polymérisation est réalisée in-situ, cela permet d'obtenir une étanchéité dans tout le volume du matériau traité. Ainsi les matériaux traités peuvent être usinés de nouveau ou polis sans que l'étanchéité ne soit remise en cause.

La pièce qui a été traitée par le procédé de l'invention ne subit pas de modification majeure de son aspect.

Par ailleurs, le procédé selon l'invention présente tous les avantages inhérents au procédé de polymérisation mis en oeuvre, faisant appel à une irradiation à l'aide d'un rayonnement ionisant (radiopolymérisation).

On peut en effet de la sorte assurer un meilleur contrôle de la polymérisation, la polymérisation est réalisée à température ambiante, au contraire de la polymérisation par thermocatalyse, et les risques d'incendie, d'explosion et de polymérisation accidentelles pendant la mise en oeuvre du procédé sont sensiblement diminués.

Enfin, les monomères radiopolymérisables spécifiques utilisés dans le procédé de l'invention sont bien connus, facilement disponibles et bon marché.

L'imprégnation est généralement réalisée à une pression dans la gamme de 1 bar (pression atmosphérique) à 10 bars et à une température dans la gamme de 20 à 60 °C pendant une durée de 24 à 48 heures.

Selon un aspect particulièrement avantageux de l'invention, l'imprégnation est réalisée naturellement par capillarité, par simple immersion du matériau dans la résine liquide à pression atmosphérique et à température ambiante c'est-à-dire généralement à 20°C, sans surpression, ni dépression, ni chauffage.

Il s'est par ailleurs avéré que des résultats optimaux étaient obtenus avec une proportion de styrène dans le mélange styrène-polyester insaturé voisine de 50%.

L'invention concerne également un matériau faiblement poreux dont la totalité de la porosité ouverte est remplie par un polymère susceptible d'être obtenu par radiopolymérisation in-situ d'une résine liquide visqueuse comprenant un monomère ou un mélange de monomères radiopolymérisables choisi parmi l'un des groupes suivants :
- les mélanges styrène-polyester insaturé dans lesquels le styrène représente de 30 à 60 % en poids du mélange,
- les méthacrylates d'hydroxyalkyle dont le groupe alkyle comporte de 1 à 4 atomes de carbone et leurs mélanges,
ledit monomère ou mélange de monomères représentant au moins 50% en poids de la résine ; ledit polymère tapissant en outre l'intérieur des pores.

Ledit matériau faiblement poreux a généralement une porosité inférieure ou égale à 5 % de préférence inférieure ou égale à 1 % en volume.

Le matériau faiblement poreux est choisi de préférence parmi le bois, les métaux, les matériaux à base de pierre ou en pierre et les matériaux composites comprenant ceux-ci.

De préférence encore ledit matériau est à base de pierre ou en pierre.

L'invention concerne également un objet comprenant ledit matériau.

Cet objet peut être choisi parmi les plaques, panneaux, blocs utilisés dans la construction, les éléments architecturaux, les oeuvres d'art, les statues etc...

L'invention va maintenant être décrite en détail.

Le matériau traité par le procédé selon l'invention peut être tout matériau faiblement poreux ou peu poreux.

Par matériau faiblement poreux ou peu poreux on a vu que l'on entendait un matériau dont la porosité est généralement inférieure ou égale à 5%, de préférence inférieure ou égale à 1%.

Le matériau peut être choisi parmi les matériaux minéraux et organiques par exemple parmi le bois, les métaux, les matériaux à base de pierre ou en pierre, et les matériaux composites comprenant ceux-ci.

Le matériau traité par le procédé selon l'invention est cependant de préférence un matériau à base de pierre ou en pierre, c'est-à-dire composé en totalité ou en partie de pierre.

Par pierre, on entend aussi bien la pierre naturelle telle que le marbre, le granite, le calcaire, la pierre artificielle, et le béton.

Il s'est avéré que l'invention s'applique avantageusement aux matériaux à base de pierre, car le matériau pierre-plastique (polymère) ainsi constitué, possède de manière inattendue des propriétés de tenue aux intempéries exceptionnelles due à une véritable synergie résultant de l'association d'une part, des propriétés de résistance de la pierre en particulier aux rayons ultraviolets et à la chaleur, et de ses propriétés de résistance mécanique, et d'autre part des propriétés de résistance des polymères vis-à-vis des liquides tels que l'eau, les polluants atmosphériques, les salissures, les agents nettoyants et lavants, les détergents, les solutions salines telle que l'eau de mer etc....

En d'autres termes, selon l'invention, il semblerait que le rôle joué par le polymère est essentiellement un rôle d'étanchéification et d'imperméabilisation de la pierre, et non de renforcement, puisque la pierre peu poreuse traitée possède déjà des propriétés mécaniques adéquates.

Le matériau traité selon l'invention peut se présenter sous une forme quelconque, par exemple de plaques, panneaux, blocs ou autres et avoir une géométrie quelconque (objets sculptés, gravés etc..) et être de dimension quelconque à condition que l'installation soit dimensionnée en conséquence.

Par exemple des plaques ou panneaux en pierre ayant une épaisseur aussi importante que 1 cm ont pu être traités avec succès par le procédé de l'invention.

Le procédé selon l'invention se décompose essentiellement en deux étapes principales : une étape d'imprégnation, et une étape de polymérisation in situ réalisée par radiopolymérisation.

Pour l'imprégnation le matériau à traiter est immergée dans un bain de résine liquide visqueuse ayant la composition déjà indiquée ci-dessus. Précisons que dans la définition de cette résine le terme « polyester insaturé » désigne des polyesters ayant des doubles liaisons par exemple, les polyesters isophtaliques.

Outre le monomère ou le mélange de monomères radiopolymérisable qui représente au moins 50% en poids de la résine, celle-ci peut contenir en outre un ou plusieurs adjuvant(s) permettant d'améliorer et/ou de modifier au moins une des propriétés du matériau.

Les adjuvants sont choisis par exemple parmi les réticulants, les composés hydrophobes, les colorants, les tensioactifs...

Les propriétés améliorées et/ou modifiées peuvent être par exemple les propriétés chimiques, physiques, l'aspect du matériau...

Ainsi on peut ajouter des réticulants qui permettent une meilleure radiopolymérisation.

Ces réticulants sont généralement présents en une quantité de 1 à 20 % en poids de la résine, et sont choisis par exemple parmi les composés di et trifonctionnels tels que le triméthylolpropane triméthacrylate.

On peut également ajouter des composés hydrophobes pour éviter une reprise d'eau par le polymère.

Ces composés hydrophobes sont généralement présents en une quantité de 1 à 20 % en poids de la résine et sont choisis par exemple parmi les esters à chaîne alkyle de 6 à 20 atomes de carbones tels que l'Ester C13.

On peut aussi ajouter des colorants pour modifier l'aspect, ou encore des tensioactifs pour améliorer le mouillage de la résine sur la pierre.

L'imprégnation est généralement réalisée à une pression dans la gamme de 1 bar (pression atmosphérique) à 10 bars et à une température dans la gamme de 20 à 60 °C pendant une durée de 24 à 48 heures.

Selon un aspect particulièrement avantageux de l'invention, l'imprégnation est réalisée naturellement par capillarité, par simple immersion du matériau dans la résine liquide, à pression atmosphérique et à température ambiante, c'est-à-dire généralement à 20°C sans surpression, ni dépression, ni chauffage.

L'imprégnation est complète, malgré la viscosité de la résine mise en oeuvre, et la faible porosité du matériau traité.

Cela constitue un avantage supplémentaire du procédé de l'invention par rapport à l'art antérieur où l'on effectue l'imprégnation avec une surpression et/ou sous vide et avec un chauffage ce qui entraîne une importante consommation d'énergie. Celle-ci se trouve fortement réduite dans le procédé selon l'invention.

Toutefois, il est également possible dans le procédé selon l'invention d'accélérer l'imprégnation en mettant la résine liquide sous pression (en soumettant la résine à une surpression) à l'aide par exemple d'un gaz neutre tel que de l'azote ou de l'argon et en chauffant pour abaisser la viscosité de la résine, la pression appliquée est généralement de 1 à 10 bars par exemple de 10 bars.

Le chauffage est généralement réalisé de façon à donner une température de la résine de 20 à 60 °C.

L'imprégnation est généralement réalisée à une proportion de 10 à 100 % en poids de résine dans le bain d'imprégnation, par rapport au poids de matériau faiblement poreux traité.

A la sortie du bain d'imprégnation, les pièces en matériau traité sont de préférence soit essuyées mécaniquement, soit rincées dans un solvant, soit égouttées afin d'enlever les coulures superficielles de résines avant la polymérisation in situ réalisée par radiopolymérisation.

La deuxième étape essentielle du procédé selon l'invention, est l'étape de polymérisation in situ par radiopolymérisation. La radiopolymérisation consiste à irradier le matériau par un rayonnement ionisant.

La radiopolymérisation permet outre les avantages déjà mentionnés plus haut, d'assurer un meilleur contrôle de la polymérisation : il suffit en effet de réduire l'intensité de l'irradiation pour réduire directement la vitesse de polymérisation.

Ce rayonnement est choisi par exemple parmi les rayonnements gamma, les rayonnements X, et les rayonnements électroniques.

La nature du rayonnement choisi est fonction de la nature du matériau traité.

Ainsi, pour le traitement des matériaux à base de pierre qui sont des matériaux assez absorbants pour les rayonnements, il est préférable d'utiliser un rayonnement assez pénétrant. De préférence on utilisera un rayonnement gamma qui est le plus pénétrant, même dans une matrice minérale, par exemple des rayons gamma issus des sources au Co⁶⁰ possèdent une énergie voisine de 1 MeV, mais des rayonnements électroniques peuvent aussi convenir.

Avec un rayonnement gamma, la polymérisation est effectuée d'une manière homogène dans tout le volume irradié.

Le rayonnement a généralement une énergie de 1 à 10 MeV.

La dose de rayonnement dépend fortement du type de polymère et surtout de l'épaisseur et de la nature du matériau à traiter, par exemple de la pierre.

La dose mise en oeuvre est généralement de 20 à 50 kGrays par exemple de 30 kGrays répartis par exemple sur une durée de 24 à 48 heures.

Par exemple, pour du marbre et sur des épaisseurs de quelques cm, des doses de 20 à 40 kGrays par exemple 30 kGrays sont suffisantes pour les résines prescrites dans le procédé de l'invention. Généralement, les rayonnements gamma sont suffisamment pénétrants pour permettre une irradiation en profondeur de plusieurs centimètres pour les matériaux à base de pierre utilisées dans une construction. Pour les faisceaux d'électrons, on peut compter sur une pénétration de 5 mm ce qui est amplement suffisant pour les applications visées.

L'irradiation est généralement réalisée dans un appareil adéquate tel qu'un irradiateur fonctionnant à température ambiante.

A la suite de l'étape de radiopolymérisation, le matériau est sorti de l'irradiateur et peut être soumis en outre à un traitement de ventilation afin d'éliminer les derniers résidus gazeux de monomères non polymérisés.

Le traitement de ventilation a généralement une durée de 24 à 48 heures

Dans le procédé selon l'invention, l'étape de radiopolymérisation est généralement réalisée immédiatement après l'étape d'imprégnation.

Cependant, s'il existe un temps mort important entre l'imprégnation et l'irradiation, il est possible de confiner les pièces en les enroulant dans un film en plastique étanche par exemple en polyéthylène afin de limiter le dégazage superficiel du monomère ou par tout autre technique équivalente.

Le film plastique peut être retiré en fin d'imprégnation.

Par ailleurs, le procédé selon l'invention, peut préalablement à l'étape d'imprégnation comprendre en outre une étape de préparation du matériau qui comprend par exemple des traitements de séchage et/ou de dégazage, le traitement de dégazage faisant généralement suite au traitement de séchage.

Le traitement de séchage peut par exemple être réalisé à une température de 30 à 150 °C, pendant une durée de 24 à 48 heures, par exemple dans une étuve.

Le traitement de dégazage est généralement réalisé sous vide, de préférence sous vide primaire c'est-à-dire sous une pression de 1 à 10 mbars pendant une durée de 24 à 48 heures.

Il est à noter que cet étape, obligatoire dans les procédés de l'art antérieur, peut être omise dans le procédé de l'invention, c'est-à-dire que le matériau est immergé directement dans le bain de résine sans dégazage préalable.

L'invention va maintenant être décrite en référence aux exemples suivants donnés à titre illustratif et non limitatif.

### EXEMPLES

Les trois exemples qui sont exposés illustrent la mise en oeuvre du procédé de l'invention sur des objets en marbre dense ayant une porosité largement inférieure à 5 %, contrôlée par un porosimètre à Mercure.

Le matériau se présente sous la forme de plaquettes ayant les dimensions suivantes 100x100x10 mm³.

### Exemple 1

Une plaque de marbre définie ci-dessus est mise dans une étuve à 105°C pendant 24 heures afin de faire un séchage très poussé de la plaque.

Puis la plaque est introduite dans une enceinte sous vide primaire avec une pression de 1-10 mbars pendant 24 h pour permettre un bon dégazage du marbre.

Après le dégazage, le marbre est immergé dans un bain de résine liquide constituée par un mélange de trois monomères :
- 85% de méthacrylate de 2-hydroxyéthyle (monomère de la famille des méthacrylate d'hydroxyalkyle)
- 10% de triméthylolpropane triméthacrylate (réticulant favorisant la radio polymérisation) ;
- 5% d'Ester C13 qui est un ester méthacrylique comportant 13 carbones (composant hydrophobe).

Le mélange est soumis à une surpression de 8 bars pendant 24h pour favoriser la pénétration de la résine à l'intérieur des pores.

A la sortie de l'enceinte d'imprégnation, le marbre est essuyé en surface avec un chiffon, puis introduit dans un irradiateur γ équipé d'une source de Co⁶⁰, délivrant une dose totale 30 kGrays étalée sur une durée de 24 heures.

La pièce est ressortie de l'irradiateur et est introduite pendant 24 h dans un local ventilé pour enlever les derniers résidus gazeux de monomères non-polymérisés.

Afin de vérifier que la pièce ainsi traitée par le procédé de l'invention est parfaitement étanche à l'eau, un échantillon de marbre est extrait de- la plaquette puis introduit dans un bain contenant un mélange d'eau et de bleu d'aniline, qui est un colorant hydrosoluble, pendant 1 semaine.

On constate au bout de ce temps que l'échantillon traité par le procédé selon l'invention a conservé sa couleur initiale.

Au contraire, un échantillon de marbre non traité par le procédé de l'invention se colore rapidement en bleu lorsqu'il est introduit dans le même mélange eau et bleu d'aniline.

### EXEMPLE 2

Une plaque de marbre définie ci-dessus est introduite dans une enceinte sous vide primaire avec une pression de 1-10 mbars pendant 24 h pour permettre un bon dégazage du marbre.

Après le dégazage, le marbre est immergé dans un bain de résine constitué par le mélange de monomères suivant :
- 50 % de styrène ;
- 50% de polyester insaturé.

Le mélange est soumis à une surpression de 8 bars pendant 24 h pour favoriser la pénétration de la résine à l'intérieur des pores.

A la sortie de l'enceinte d'imprégnation, le marbre est essuyé en surface avec un chiffon puis introduit dans un irradiateur γ équipé d'une source de Co⁶⁰, délivrant une dose totale 30 kGrays étalée sur une durée de 24 heures.

La pièce est ressortie de l'irradiateur et est introduite pendant 24 h dans un local ventilé pour enlever les derniers résidus gazeux de monomères non-polymérisés.

Afin de vérifier que la pièce ainsi traitée par le procédé de l'invention est parfaitement étanche à l'eau, un échantillon de marbre est extrait de la plaquette puis introduit dans un bain contenant un mélange d'eau et de bleu d'aniline, qui est un colorant hydrosoluble, pendant 1 semaine.

On constate au bout de ce temps que l'échantillon traité par le procédé selon l'invention a conservé sa couleur initiale.

Au contraire, un échantillon de marbre non traité par le procédé de l'invention se colore rapidement en bleu.

### Exemple 3

Sans dégazage préalable, une plaquette de marbre définie ci-dessus est immergée directement dans un bain de résine liquide constitué par le mélange de monomères suivants
- 50 % de styrène ;
- 50% de polyester insaturé.

Le mélange est soumis à la pression atmosphérique pendant 24 h pour favoriser la pénétration de la résine à l'intérieur du marbre. Dans cet exemple, au contraire des exemples 1 et 2, seuls les phénomènes capillaires assurent la pénétration de la résine à l'intérieur du marbre qui n'est soumis à aucune dépression ni à aucune surpression.

A la sortie de l'enceinte d'imprégnation, le marbre est essuyé en surface avec un chiffon, puis introduit dans un irradiateur γ équipé d'une source de Co⁶⁰, délivrant une dose totale 30 kGrays étalée sur une durée de 24 heures.

La pièce est ressortie de l'irradiateur et est introduite pendant 24h dans un local ventilé pour enlever les derniers résidus gazeux de monomères non-polymérisés.

Afin de vérifier que la pièce ainsi traitée par le procédé de l'invention est parfaitement étanche à l'eau, un échantillon de marbre est extrait de la plaquette puis introduit dans un bain contenant un mélange d'eau et de bleu d'aniline, qui est un colorant hydrosoluble pendant 1 semaine.

On constate au bout de ce temps que l'échantillon traité par le procédé selon l'invention a conservé sa couleur initiale.

Au contraire un échantillon de marbre non traité par le procédé de l'invention se colore rapidement en bleu.

Cet exemple démontre que même sans appliquer de surpression au mélange liquide d'imprégnation c'est-à-dire en opérant simplement à pression atmosphérique et sans créer en outre de dépression le procédé de l'invention permet une excellente étanchéification et imperméabilisation du marbre traité.

L'invention trouve en particulier son application dans le domaine de la construction notamment de la construction de bâtiments.

Elle peut ainsi s'appliquer au traitement des pièces de revêtements du sol et des murs à l'intérieur ou à l'extérieur des bâtiments.

En effet, le procédé selon l'invention permet d'étanchéifier des plaques ou panneaux en pierre naturelle par exemple en marbre, granit, calcaire, etc... qui malgré leur aspect esthétique sont encore peu utilisées actuellement.

Le procédé selon l'invention permet d'utiliser ces matériaux sans problème à l'extérieur du fait de l'étanchéité totale assurée par le procédé selon l'invention. Une bonne résistance des pierres contre les infiltrations humides qui peuvent soit décoller les plaques de revêtement de leur support, soit les détériorer mécaniquement dans le temps avec des cycles gel-dégels successifs est attendue.

De plus, ces matériaux sont grâce à leur traitement par le procédé de l'invention moins sensibles à la pollution urbaine et à l'encrassage.

Par ailleurs, ce type de matériau se prête bien au lavage sans risque de détérioration chimique par les détergents utilisés.

Une autre utilisation de l'invention est le traitement des objets relevant du patrimoine culturel comme par exemple les statues en pierre les objets en pierre gravés, les éléments d'architecture, pour les protéger contre les intempéries extérieures.

## Revendications

1. Procédé d'imperméabilisation et d'étanchéification d'un matériau faiblement poreux ayant une porosité inférieure ou égale à 5 %, dans lequel ledit matériau est imprégné par immersion dans une résine liquide visqueuse comprenant un monomère ou un mélange de monomères radiopolymérisables choisi parmi l'un des groupes suivants :
- les mélanges styrène-polyester insaturé dans lesquels le styrène représente de 30 à 60 % en poids du mélange,
- les méthacrylates d'hydroxyalkyle dont le groupe alkyle comporte de 1 à 4 atomes de carbone et leurs mélanges,
ledit monomère ou mélange de monomères représentant au moins 50% en poids de la résine ;
puis ladite résine imprégnant le matériau est polymérisée in situ en irradiant ledit matériau imprégné avec un rayonnement ionisant.

2. Procédé selon la revendication 1 dans lequel le matériau faiblement poreux à une porosité inférieure ou égale à 1 %.

3. Procédé selon la revendication 1 dans lequel l'imprégnation est réalisée à une pression dans la gamme de 1 bar à 10 bars, à une température dans la gamme de 20 à 60 °C, pendant une durée de 24 à 48 heures.

4. Procédé selon la revendication 3 dans lequel l'imprégnation est réalisée naturellement, par capillarité, à pression atmosphérique et à température ambiante, sans appliquer ni surpression ni dépression à la résine liquide, et sans chauffage.

5. Procédé selon la revendication 1 dans lequel la proportion de styrène dans le mélange styrène-polyester insaturé est voisine de 50 %.

6. Procédé selon l'une quelconque des revendications 1 à 5 dans lequel le matériau faiblement poreux est choisi parmi le bois, les métaux, les matériaux à base de pierre ou en pierre et les matériaux composites comprenant ceux-ci.

7. Procédé selon la revendication 6 dans lequel lesdits matériaux à base de pierre ou en pierre sont choisis parmi les matériaux à base de ou en marbre, granite, calcaire, pierre artificielle, et béton.

8. Procédé selon la revendication 1 dans lequel ladite résine liquide contient en outre un ou plusieurs adjuvants(s) pour améliorer et/ou modifier au moins une des propriétés du matériau.

9. Procédé selon la revendication 8 dans lequel le ou ledit(s) adjuvant(s) sont choisis parmi les réticulants, les composés hydrophobes, les colorants et les tensioactifs.

10. Procédé selon la revendication 1 dans lequel ledit rayonnement ionisant est choisi parmi les rayonnements gamma, les rayonnements X et les rayonnements électroniques.

11. Procédé selon la revendication 10 dans lequel le rayonnement a une énergie de 1 à 10 MeV.

12. Procédé selon l'une quelconque des revendication 10 et 11 dans lequel la dose de rayonnement est de 20 à 50 kGrays.

13. Matériau faiblement poreux ayant une porosité inférieure ou égale à 5 %, dont la totalité de la porosité ouverte est remplie par un polymère susceptible d'être obtenu par radiopolymérisation in-situ d'une résine liquide visqueuse comprenant un monomère ou un mélange de monomères radiopolymérisables choisi parmi l'un des groupes suivants :
- les mélanges styrène-polyester insaturé dans lesquels le styrène représente de 30 à 60 % en poids du mélange,
- les méthacrylates d'hydroxyalkyle dont le groupe alkyle comporte de 1 à 4 atomes de carbone et leurs mélanges,
ledit monomère ou mélange de monomères représentant au moins 50% en poids de la résine ; ledit polymère tapissant en outre l'intérieur des pores.

14. Matériau selon la revendication 13 dans lequel ledit matériau faiblement poreux a une porosité inférieure ou égale à 1 %.

15. Matériau selon l'une quelconque des revendications 13 à 14 dans lequel le matériau faiblement poreux est choisi parmi le bois, les métaux, les matériaux à base de pierre ou en pierre et les matériaux composites comprenant ceux-ci.

16. Matériau selon la revendication 15 dans lequel lesdits matériaux à base de pierre ou en pierre sont choisis parmi les matériaux à base de ou en marbre, granite, calcaire, pierre artificielle, et béton.

17. Objet comprenant le matériau selon l'une quelconque des revendications 13 à 16.

18. Objet selon la revendication 17 choisi parmi les plaques, panneaux, blocs utilisés dans la construction, les éléments architecturaux, les oeuvres d'art, et les statues.
